# EUROPEAN PATENT APPLICATION

(11) **EP 3 885 660 A1**
(43) Date of publication of application: **29.09.2021**
(21) Application number: 20165429.0
(22) Date of filing: 24.03.2020
(51) Int. Cl.: F24F 11/00, F24F 11/65, F24F 11/72, F24F 11/74, F24F 1/0007, F24F 3/14, F24F 3/16, F24F 110/10, F24F 110/20, F24F 110/65

(54) **METHOD FOR CONDITIONING INDOOR AIR**

(71) Applicant: Aeotec Technology (Shenzhen) Ltd., Co., Shenzhen, Qinghai (CN)
(72) Inventor: KERMER, Marcel, Shenzhen, Qinghai (CN); DYKES, Daniel Paul, Shenzhen, Qinghai (CN)
(74) Representative: Dargiewicz, Joanna

(57) **Abstract**

A method for conditioning indoor air comprises the steps of obtaining a detecting value of any one of detecting indexes of the indoor air; determining whether the detecting value is within a preset range; if yes, executing a next operation; if no, determining whether the detecting value is greater than an upper limit of the preset range; if yes, executing a first preset operation to make the detecting value return to the preset range; and if no, executing a second preset operation to make the detecting value return to the preset range. The method for conditioning indoor air provided in the present application is capable of detecting the indoor air automatically and controlling corresponding electric appliances to work according to the detecting value automatically, which makes the air return to a reasonable range and improves the intelligence degree of the electric appliances.

## Description

### TECHNICAL FIELD

The disclosure relates to the technical field of air conditioning, and particularly to a method for conditioning indoor air.

### BACKGROUD OF THE PRESENT INVENTION

With the development of economy and the progress of technology, the buildings in city are built higher and higher. More and more people move into cities, which brings a series of problems such as traffic jam, environmental pollution and son on.

In a certain time of the year, the big cities in the north of China suffer from fog and haze weather, and the indexes of the indoor air fluctuate at any time, which bothers people live and work indoor. We need to keep the indoor air clean for normal work and life.

### SUMMARY OF THE PRESENT INVENTION

Aiming at above-mentioned problems, the disclosure provides a method for conditioning the indoor air. The method comprises the following steps.
- obtaining a detecting value of any one of detecting indexes of the indoor air;
- determining whether the detecting value is within a preset range;
- if yes, executing a next operation;
- if no, determining whether the detecting value is greater than an upper limit of the preset range;
- if yes, executing a first preset operation to make the detecting value return to the preset range; and
- if no, executing a second preset operation to make the detecting value return to the preset range.

Advantageously, the detecting indexes include air temperature, air humidity and air mold density.

Advantageously, when the detecting index is the air temperature, the first preset operation includes opening an indoor air conditioner in a cooling mode to cool the air, and the second preset operation includes opening the indoor air conditioner in a heating mode to heat the air.

Advantageously, when the detecting index is the air temperature, the first preset operation includes increasing a rotating speed of an indoor air fan to decrease the air temperature, and the second preset operation includes decrease the rotating speed of the indoor air fun to increase the air temperature.

Advantageously, when the detecting index is the air temperature, the first preset operation includes opening an indoor ventilator to increase airflow, and the second preset operation includes closing the indoor ventilator to decrease the airflow.

Advantageously, when the detecting index is the air humidity, the first preset operation includes opening an indoor drier to decrease the air humidity, and the second preset operation includes opening an indoor humidifier to increase the air humidity.

Advantageously, when the detecting index is the air humidity, the first preset operation includes opening an indoor air conditioner in a dehumidification mode to decrease the air humidity, and the second preset operation includes opening an indoor humidifier to increase the air humidity.

Advantageously, when the detecting index is the air humidity, the first preset operation includes opening an indoor air fun to increase airflow and hence decrease the air humidity, and the second preset operation includes opening an indoor humidifier to increase the air humidity.

Advantageously, when the detecting index is the air mold density, the first preset operation includes opening an indoor ultraviolet lamp to decrease the air mold density.

Advantageously, when the detecting index is the air mold density, the first preset operation includes opening an indoor air purifier to decrease the air mold density.

The method for conditioning indoor air provided in the present application is capable of detecting the indoor air automatically and controlling corresponding electric appliances to work according to the detecting value automatically, which makes the air return to a reasonable range and improves the intelligence degree of the electric appliances.

### DESCRIPTION OF THE DRAWINGS

In order to make the technical solutions in the disclosure or in the prior art described more clearly, the drawings associated to the description of the embodiments or the prior art will be illustrated concisely hereinafter. Obviously, the drawings described below are only some embodiments according to the disclosure. Numerous drawings therein will be apparent to one of ordinary skill in the art based on the drawings described in the disclosure without creative efforts.
Fig.1 is a flow chart of a method for conditioning indoor air according to the disclosure;
Fig.2 is a schematic diagram of a system for conditioning indoor air according to the disclosure; and
Fig.3 is a schematic diagram showing the relationship among the temperature, humidity and mold density in the method for conditioning the indoor air according to the disclosure.

### DETAILED DESCRIPTION OF PREFERRED EMBODIMENTS

In order to make the objects, technical solution and advantages of the present disclosure more clear, the present disclosure will be further described in detail with reference to the accompanying drawings and embodiments below. It should be understood that embodiments described here are only for explaining the present disclosure and the disclosure, however, should not be constructed as limited to the embodiment as set forth herein. In addition, the descriptions to the well-known structure and technology are omitted in the following descriptions to avoid unnecessarily confusing with the concept of the present invention.

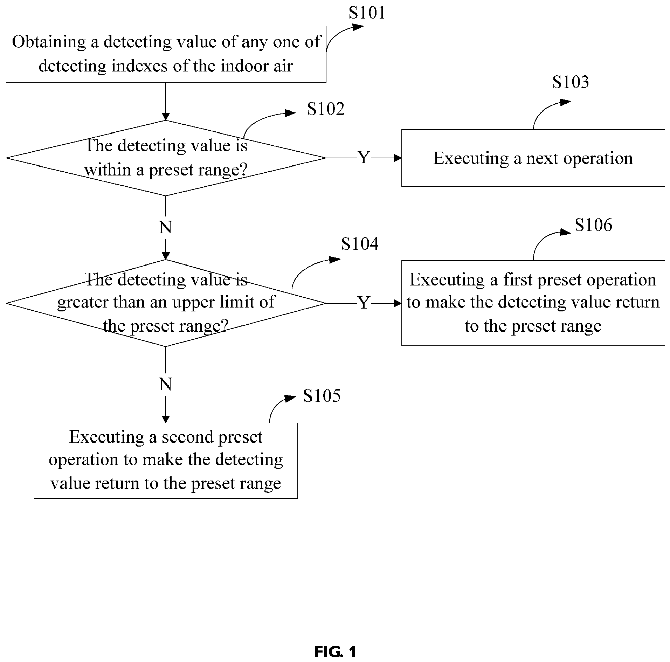

As shown in Figs. 1-3, the present application provides a method for conditioning indoor air in this embodiment. The method comprises the following steps.
S101: obtaining a detecting value of any one of detecting indexes of the indoor air;
S102: determining whether the detecting value is within a preset range;
S103: if yes, executing a next operation;
S104: if no, determining whether the detecting value is greater than an upper limit of the preset range;
S105: if yes, executing a first preset operation to make the detecting value return to the preset range; and
S106: if no, executing a second preset operation to make the detecting value return to the preset range.

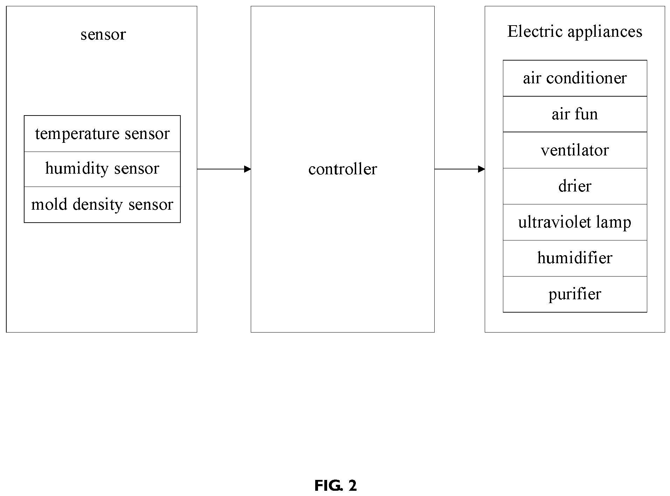

As shown in Fig. 2, when this method is used according to this embodiment, the sensors are first used to detect the value of any one of detecting indexes of the indoor air. In the embodiment of this application, the detecting indexes include air temperature, air humidity and air mold density. The air mold density refers to the amount of mold in unit volume of air. Accordingly, the sensors include temperature sensor, humidity sensor and mold density sensor. The sensors may also include other sensors, such as particle density sensor and so on. The detecting value is then transmitted from the sensor to a controller in which the detecting value is compared with preset thresholds. If the detecting value is within a present range, it indicates that the air index is normal. The controller executes a next operation at this time, for example, if the next operation is continuing detecting the air index, the controller hence detecting the air index continuously. If the detecting value is not within the preset range, it is determined whether the detecting value is greater than the upper limit or smaller than the lower limit. In this embodiment, it is determined whether the detecting value is greater than the upper limit at this time. If the detecting value is greater than the upper limit, the controller hence controls the electric appliances to execute a first preset operation to make the detecting value of the detecting index of the indoor air return to the preset range. If the detecting value is not greater than the upper limit, it means that the detecting value is smaller than the lower limit, the controller (such as PLC) hence controls the electric appliances to execute a second preset operation to make the detecting value of the detecting index of the indoor air return to the preset range.

As shown in Figs. 1-3, in the embodiment of this application, when the detecting index is the air temperature, the first preset operation includes opening an indoor air conditioner in a cooling mode to cool the air, and the second preset operation includes opening the indoor air conditioner in a heating mode to heat the air.

As shown in Figs. 1-3, in the embodiment of this application, when the detecting index is the air temperature, the first preset operation includes increasing a rotating speed of an indoor air fan to decrease the air temperature, and the second preset operation includes decrease the rotating speed of the indoor air fun to increase the air temperature.

As shown in Figs. 1-3, in the embodiment of this application, when the detecting index is the air temperature, the first preset operation includes opening an indoor ventilator to increase airflow, and the second preset operation includes closing the indoor ventilator to decrease the airflow.

As shown in Figs. 1-3, in the embodiment of this application, when the detecting index is the air humidity, the first preset operation includes opening an indoor drier to decrease the air humidity, and the second preset operation includes opening an indoor humidifier to increase the air humidity.

As shown in Figs. 1-3, in the embodiment of this application, when the detecting index is the air humidity, the first preset operation includes opening an indoor air conditioner in a dehumidification mode to decrease the air humidity, and the second preset operation includes opening an indoor humidifier to increase the air humidity.

As shown in Figs. 1-3, in the embodiment of this application, when the detecting index is the air humidity, the first preset operation includes opening an indoor air fun to increase airflow and hence decrease the air humidity, and the second preset operation includes opening an indoor humidifier to increase the air humidity.

As shown in Figs. 1-3, in the embodiment of this application, when the detecting index is the air mold density, the first preset operation includes opening an indoor ultraviolet lamp to decrease the air mold density.

As shown in Figs. 1-3, in the embodiment of this application, when the detecting index is the air mold density, the first preset operation includes opening an indoor air purifier to decrease the air mold density.

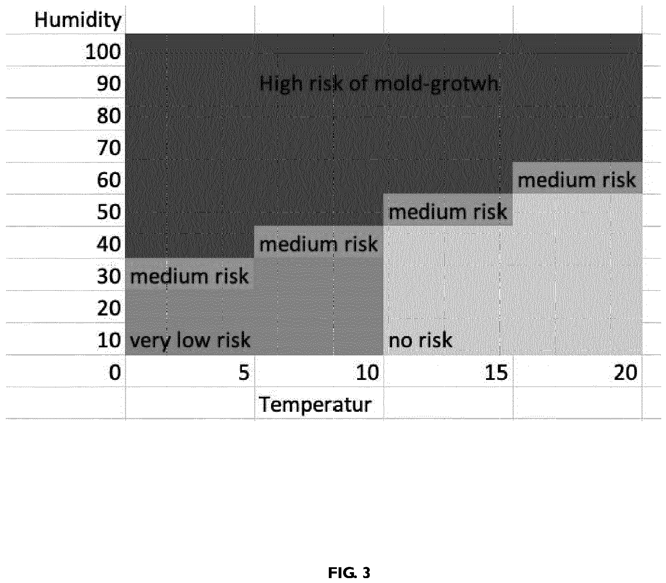

As shown in Fig. 3, in the embodiment of this application, the relationship between the mold density of the indoor air and the temperature and humidity is shown. The mold density can be adjusted by controlling the temperature and humidity according the method described above.

The method for conditioning indoor air provided in the present application is capable of detecting the indoor air automatically and controlling corresponding electric appliances to work according to the detecting value automatically, which makes the air return to a reasonable range and improves the intelligence degree of the electric appliances.

It should be understood that embodiments described above are only for illustrating or explaining the principle of the present disclosure and the disclosure, however, should not be constructed as limited to the embodiment as set forth above. Therefore, any modification, equivalent alternation, improvement and so on obtained without departing from the spirit and scope of the present disclosure falls into the protect scope of the present invention. Moreover, the appended claims are aimed at including all the variations and modifications falling into the scope and boundary of the claims or the equivalent scope and boundary of the claims.

## Claims

1. A method for conditioning indoor air, comprising:
obtaining a detecting value of any one of detecting indexes of the indoor air;
determining whether the detecting value is within a preset range;
if yes, executing a next operation;
if no, determining whether the detecting value is greater than an upper limit of the preset range;
if yes, executing a first preset operation to make the detecting value return to the preset range; and
if no, executing a second preset operation to make the detecting value return to the preset range.

2. The method for conditioning indoor air according to claim 1, wherein the detecting indexes include air temperature, air humidity and air mold density.

3. The method for conditioning indoor air according to claim 1, wherein when the detecting index is the air temperature, the first preset operation includes opening an indoor air conditioner in a cooling mode to cool the air, and the second preset operation includes opening the indoor air conditioner in a heating mode to heat the air.

4. The method for conditioning indoor air according to claim 1, wherein when the detecting index is the air temperature, the first preset operation includes increasing a rotating speed of an indoor air fan to decrease the air temperature, and the second preset operation includes decrease the rotating speed of the indoor air fun to increase the air temperature.

5. The method for conditioning indoor air according to claim 1, wherein when the detecting index is the air temperature, the first preset operation includes opening an indoor ventilator to increase airflow, and the second preset operation includes closing the indoor ventilator to decrease the airflow.

6. The method for conditioning indoor air according to claim 1, wherein when the detecting index is the air humidity, the first preset operation includes opening an indoor drier to decrease the air humidity, and the second preset operation includes opening an indoor humidifier to increase the air humidity.

7. The method for conditioning indoor air according to claim 1, wherein when the detecting index is the air humidity, the first preset operation includes opening an indoor air conditioner in a dehumidification mode to decrease the air humidity, and the second preset operation includes opening an indoor humidifier to increase the air humidity.

8. The method for conditioning indoor air according to claim 1, wherein when the detecting index is the air humidity, the first preset operation includes opening an indoor air fun to increase airflow and hence decrease the air humidity, and the second preset operation includes opening an indoor humidifier to increase the air humidity.

9. The method for conditioning indoor air according to claim 1, wherein when the detecting index is the air mold density, the first preset operation includes opening an indoor ultraviolet lamp to decrease the air mold density.

10. The method for conditioning indoor air according to claim 1, wherein when the detecting index is the air mold density, the first preset operation includes opening an indoor air purifier to decrease the air mold density.
